# EUROPEAN PATENT SPECIFICATION

(11) **EP 3 043 406 B1**
(45) Date of publication and mention of the grant of the patent: **14.03.2018**
(21) Application number: 16150916.1
(22) Date of filing: 12.01.2016
(51) Int. Cl.: H01M 4/04, H01M 4/139, H01M 10/0562, H01M 10/0585

(54) **SOLID-STATE BATTERIES AND METHODS FOR FABRICATION**
FESTSTOFFBATTERIE UND VERFAHREN ZUR HERSTELLUNG
BATTERIES À L'ÉTAT SOLIDE ET PROCÉDÉS DE FABRICATION

(30) Priority: 12.01.2015 EP 15150848
(43) Date of publication of application: 13.07.2016
(73) Proprietor: IMEC VZW, 3001 Leuven (BE); Katholieke Universiteit Leuven, 3000 Leuven (BE)
(72) Inventor: VEREECKEN, Philippe M., 3001 Leuven (BE); CHEN, Xubin, 3001 Leuven (BE); HUYGHEBAERT, Cedric, 3001 Leuven (BE)
(74) Representative: DenK iP

(56) References cited:
- EP-A1- 1 120 850
- WO-A1-2013/161516
- DE-A1- 10 347 570
- US-A- 6 066 417
- US-A- 6 153 337
- US-A1- 2011 045 355
- US-A1- 2014 363 744

## Description

### Field of the invention

The present invention relates to all-solid-state batteries comprising composite components and to methods for fabricating such all-solid-state batteries.

The present invention further relates to composite electrodes and to methods for fabricating such composite electrodes.

### Background of the invention

All-solid-state ceramic battery cells comprising a solid inorganic electrolyte are known. In a fabrication process for such battery cells, a solid electrolyte powder is mixed with an active electrode material in order to realize a large interface between the active electrode material and the electrolyte. When using an inorganic oxide electrolyte material, a sintering step at high temperature, e.g. exceeding 500°C, is needed to weld the materials together, and to form a composite electrode with paths for ionic transport and charge conduction. Instead of oxide electrolyte materials, softer sulfide materials may be used. Such materials can be pressed together more easily and a much lower thermal budget is needed to form a composite electrode. However, these materials are very reactive and difficult to handle. Further, they pose potential safety issues, as gaseous and poisonous H₂S may be formed as an undesired byproduct, e.g. when overcharging a battery.

Requirements for the solid electrolyte of an all-solid-state battery cell include a high ion conductivity (e.g. higher than 10⁻³ S/cm), negligible electric conductivity (e.g. lower than 10⁻¹⁰ S/cm), and chemical stability. Composite electrolytes have been proposed as a solution to combine a good ion conductivity with chemical stability. Composite electrolytes are materials composed of a metal salt and an inert material, such as e.g. an oxide, acting as a host structure for the metal ions. In such composite electrolytes ionic conduction mainly occurs via interfaces between the metal salt and the inert material.

Powder based methods are known for fabricating such inorganic composite electrolytes. Inorganic composite electrolytes may for example be made by mixing a Li-salt with inert oxide particles, followed by sintering. Also the use of micro-porous particles has been reported, wherein the salt covers the pore walls inside the particles.

A problem related to particle based or powder based inorganic composite electrolytes is the poor ionic conduction from particle to particle. For example, in case of a composite electrolyte comprising oxide particles coated with a Li salt, a higher ion conductance is achieved at the interface between the Li salt and the inert oxide surface. Therefore, a higher surface area (corresponding to smaller particles) would in principle lead to a higher ion conductivity. However, as the ion conduction further proceeds through the bulk of the poorly conducting Li salt interconnecting the particles, smaller particles lead to more connections between particles and thus a lower ion conductivity.

### Summary of the invention

A need exists for an improved electrolyte, an electrode comprising said electrolyte and a method for fabricating an electrolyte and electrode.

A need exists for an improved all-solid-state battery and method for fabricating an all-solid-state battery.

It an object of the present invention to provide efficient components and methods for all-solid-state batteries.

It is an advantage of embodiments of the present invention that composite electrodes having a good ion conductivity are provided, for example higher than 10⁻⁴ S/cm, preferably higher than 10⁻³ S/cm. Embodiments of the present invention further provide batteries comprising such composite electrodes.

It is an advantage of embodiments of the present invention to provide solid-state battery cells comprising a composite electrolyte and at least one composite electrode, wherein the composite electrolyte and the at least one composite electrode have a good ion conductivity, for example higher than 10⁻⁴ S/cm, preferably higher than 10⁻³ S/cm. Embodiments of the present invention further provide batteries comprising such battery cells.

It is an advantage of embodiments of the present invention to provide methods for the fabrication of composite electrodes with a good ion conductivity (e.g. exceeding 10⁻⁴ S/cm), wherein the fabrication methods can be performed at temperatures not exceeding 500°C and thus require a low temperature budget.

It is an advantage of embodiments of the present invention to provide methods for the fabrication of composite electrodes with a good ion conductivity (e.g. exceeding 10⁻⁴ S/cm), wherein the fabrication methods are compatible with roll-to-roll processing.

It is an advantage of embodiments of the present invention to provide methods for the fabrication of solid-state battery cells and solid-state batteries comprising a composite electrolyte with a good ion conductivity (e.g. exceeding 10⁻⁴ S/cm, preferably exceeding 10⁻³ S/cm) and comprising at least one composite electrode with a good ion conductivity (e.g. exceeding 10⁻⁴ S/cm, preferably exceeding 10⁻³ S/cm), wherein the fabrication methods can be performed at temperatures not exceeding 500°C. and thus require a low temperature budget.

It is an advantage of embodiments of the present invention to provide methods for the fabrication of solid-state battery cells and solid-state batteries comprising a composite electrolyte with a good ion conductivity (e.g. exceeding 10⁻⁴ S/cm, preferably exceeding 10⁻³ S/cm) and comprising at least one composite electrode with a good ion conductivity (e.g. exceeding 10⁻⁴ S/cm, preferably exceeding 10⁻³ S/cm), wherein the fabrication methods are compatible with roll-to-roll processing.

Embodiments of the present invention relate to composite electrodes comprising an active electrode material and a solid electrolyte, wherein the solid electrolyte is a composite electrolyte. The composite electrolyte comprises an electrically insulating material having a plurality of pores and a solid electrolyte material covering inner surfaces of the plurality of pores.

It is an advantage of embodiments of the present invention that composite electrolytes are used as a solid electrolyte layer, which can combine higher ion conductivity with chemical stability.

In embodiments of the present invention the active electrode material may comprise a plurality of active electrode material particles in electrical contact with each other, and the composite electrolyte may be located in spaces between the plurality of active electrode material particles.

A composite electrode according to embodiment of the present invention may further comprise other elements such as for example an electrically conductive additive and/or a binder. The openings or spaces present between the plurality of active electrode material particles and the other elements part of the composite electrode, e.g. the electrically conductive additive and/or binder, form a network. The composite electrolyte is located in said network.

Embodiments of the present invention further relate to a solid-state battery comprising a stack of an anode, a solid electrolyte layer and a cathode, wherein at least one of the anode and the cathode is a composite electrode according to embodiments of the present invention.

The solid electrolyte layer used in embodiments of the present invention may comprise a composite electrolyte comprising an electrically insulating material having a plurality of pores and a solid electrolyte material at least partially covering inner surfaces of the plurality of pores.

The composite electrode and the solid electrolyte layer according to embodiments of the present invention may for example comprise the same composite electrolyte, e.g. share the same composite electrolyte.

The solid-state battery according to embodiments of the present invention may further comprise a first current collector in electrical contact with the anode and a second current collector in electrical contact with the cathode.

Embodiments of the present invention further relate to a method for fabricating a composite electrode, wherein the method comprises: preparing an electrode slurry comprising a plurality of active electrode material particles and an electrically conductive additive; coating the electrode slurry on a substrate; drying the electrode slurry, thereby forming an electrode coating; compressing the electrode coating, thereby forming a compressed electrode coating; providing a liquid or viscous glass precursor in the compressed electrode coating; performing a heat treatment, thereby transforming the glass precursor into a solid porous electrically insulating material comprising a plurality of pores; and covering the inner surfaces of the plurality of pores with a solid electrolyte material.

Drying the electrode slurry may for example comprise heating to a temperature lower than the temperature at which the glass precursor may be transformed into a porous structure, for example a temperature in the range between 70°C and 150°C, embodiments of the present invention not being limited thereto.

Performing the heat treatment may for example comprise heating to a temperature suitable for transferring the glass precursor material into a solid porous material comprising a plurality of pores, for example a temperature in the range between 150°C and 500°C, embodiments of the present invention not being limited thereto.

In embodiments of the present invention providing the liquid or viscous glass precursor in the compressed electrode coating may comprise providing the glass precursor in the electrode slurry, i.e. mixing the glass precursor with the electrode slurry, before coating the electrode slurry on the substrate.

In embodiments of the present invention providing the liquid or viscous glass precursor in the compressed electrode coating may comprise: coating the glass precursor on the compressed electrode coating; and allowing the glass precursor to penetrate into the compressed electrode coating, thereby filling spaces between the plurality of active electrode material particles. After performing the heat treatment, this results in a solid porous electrically insulating material being located in the network formed by the plurality of active electrode material particles and the electrically conductive additive.

In embodiments of the present invention, the method for fabricating a composite electrode further comprises: filling the plurality of pores of the porous electrically insulating material at least partially with a liquid electrolyte material; and performing a drying step, thereby forming a solid electrolyte material covering inner walls or inner surfaces of the plurality of pores.

In embodiments of the present invention, filling the plurality of pores of the porous electrically insulating material at least partially with a liquid electrolyte material may comprise dipping the porous electrically insulating material in a liquid electrolyte material, or alternatively dropping a liquid electrolyte material onto the porous electrically insulating material. The liquid electrolyte material will penetrate into the pores of the porous material. After drying said liquid electrolyte material, a solid electrolyte material covering the inner surfaces of the plurality of pores is obtained. In alternative embodiments the solid electrolyte material may be provided in the plurality of pores of the porous electrically insulating material by depositing the solid electrolyte material on the inner surfaces of the plurality of pores by means of a vapor-based method such as Chemical Vapor Deposition (CVD), for example Atomic Layer Deposition (ALD).

In alternative embodiments of the present invention, the method for fabricating a composite electrode further comprises mixing the glass precursor with a liquid electrolyte material before performing the heat treatment.

Embodiment of the present invention further relate to methods for fabricating a solid-state battery.

A method for fabricating a solid-state battery according to embodiments of the present invention comprises: forming on a first substrate a compressed anode coating comprising at least a plurality of active anode material particles, an electrically conductive additive and a first glass precursor; forming on a second substrate a compressed cathode coating comprising at least a plurality of active cathode material particles, an electrically conductive additive and a second glass precursor; providing a third glass precursor on at least one of the anode coating and the cathode coating; drying the third glass precursor at a temperature below the temperature at which the third glass precursor may be transformed into a porous structure, for instance a temperature in the range between 70°C and 150°C, thereby forming a glass layer having a predetermined thickness; afterwards heating the compressed anode coating, the compressed cathode coating and the glass layer to a temperature suitable for transforming the (dried) first glass precursor of the compressed anode coating, the (dried) second glass precursor of the compressed cathode coating, and the glass layer (the dried third glass precursor) into a solid porous material comprising a plurality of pores, for instance a temperature in the range between 150°C and 500°C, thereby transforming the first glass precursor, the second glass precursor and the glass layer into a solid porous material comprising a plurality of pores; filling the plurality of pores at least partially with a liquid electrolyte material; and drying the liquid electrolyte material, thereby forming a solid electrolyte material on inner surfaces of the plurality of pores and thereby forming a composite cathode, a composite electrolyte layer and a composite anode.

In an alternative fabrication method according to embodiments of the present invention, the step of providing a solid electrolyte material by filling the porous glass with a liquid electrolyte followed by a drying step, may be substituted by the step of depositing the solid electrolyte material on the inner surfaces of the plurality of pores by means of a vapor-based method such as Chemical Vapor Deposition (CVD), for example Atomic Layer Deposition (ALD).

In embodiments of the present invention, the method for fabricating a solid-state battery further comprises: laminating the first substrate comprising the composite anode to the second substrate comprising the composite cathode, thereby forming a stack of a composite anode, a composite electrolyte layer and a composite cathode.

In alternative embodiments of the present invention, providing the third glass precursor may comprise providing the third glass precursor on the compressed cathode coating, and forming the compressed anode coating on the first substrate may comprise forming the compressed anode coating on the glass layer.

Certain objects and advantages of various inventive aspects have been described herein above. Of course, it is to be understood that not necessarily all such objects or advantages may be achieved in accordance with any particular embodiment of the present invention. Thus, for example, those skilled in the art will recognize that the present invention may be embodied or carried out in a manner that achieves or optimizes one advantage or group of advantages as taught herein without necessarily achieving other objects or advantages as may be taught or suggested herein. Further, it is understood that this summary is merely an example and is not intended to limit the scope of the present invention, which is defined by the appended claims. The present invention, both as to organization and method of operation, together with features and advantages thereof, may best be understood by reference to the following detailed description when read in conjunction with the accompanying drawings.

### Brief description of the figures

FIG 1 schematically illustrates a solid-state battery in accordance with an embodiment of the present invention.
FIG 2 schematically illustrates a solid-state battery in accordance with an embodiment of the present invention.
FIG 3 illustrates an example of a method that may be used for fabricating a composite electrode according to embodiments of the present invention.
FIG 4 illustrates an example of a method that may be used for fabricating a composite electrode according to embodiments of the present invention.
FIG 5 schematically illustrates an example of a process flow for fabricating a solid-state battery according to embodiments of the present invention.
FIG 6 schematically illustrates an example of a process flow for fabricating a solid-state battery according to embodiments of the present invention.

Any reference signs in the claims shall not be construed as limiting the scope of the present invention.

In the different drawings, the same reference signs refer to the same or analogous elements.

### Detailed description of illustrative embodiments

In the following detailed description, numerous specific details are set forth in order to provide a thorough understanding of the invention and how it may be practiced in particular embodiments. However, it will be understood that the present invention may be practiced without these specific details. In other instances, well-known methods, procedures and techniques have not been described in detail, so as not to obscure the present disclosure.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noted that the term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments of the invention.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The term "battery", used in embodiments of the present invention, may also be interpreted as an electrochemical cell which is a device capable of either generating energy from chemical reactions or facilitating chemical reactions through the introduction of electrical energy. Embodiments of the present invention may be combined so as to provide two or more cells, connected either in parallel or series. An electrochemical cell may comprise two half-cells, whereby a half-cell comprises a composite electrode and a solid electrolyte layer. The two half-cells may use the same electrolyte or they may use different electrolytes. The chemical reactions in the cell may involve the composite electrolyte, the composite electrodes, or an external substance.

The term "composite electrolyte" used in embodiments of the present invention, may refer to a material comprising an electrically insulating material, e.g. a continuous layer of electrically insulating material, having a plurality of pores; and a solid electrolyte material covering the inner surfaces of the plurality of pores. By using a continuous porous electrically insulating material in accordance with embodiments of the present invention, instead of discontinuous particles, as the basis for the composite electrolyte, advantageously a continuous path for ionic conduction exists at the interface between the solid electrolyte material and the electrically insulating material. This advantageously results in an improved ion conductivity as compared to particle based composite electrolytes. Hence a continuous electrically insulating material may be beneficial and at the same time it can provide an elegant solution for the introduction of a solid ionic conductor (solid electrolyte material). In addition, the process only requires temperatures below 500 °C and therefore is considered a low-temperature fabrication process.

In a rechargeable battery, the electrode that is the negative electrode in discharge (i.e. battery operation) becomes the positive electrode when charging the battery. Herein further with anode material and cathode material are meant the materials that are the anode (negative electrode) and, respectively, the cathode (positive electrode) during battery operation or discharge. Through the description, when referring to "anode material", the negative electrode material is meant, and when referring to "cathode material", the positive electrode material is meant.

Embodiments of the present invention relate to a composite electrode, e.g. for use in an all-solid-state battery cell, wherein the composite electrode comprises a mixture of an active electrode material and a composite electrolyte. The active electrode material comprises a plurality of active electrode material particles in electrical contact with each other. Since each active electrode particle, e.g. sphere, is in contact with other conductive active electrode particles, e.g. spheres, an electronic conductive network or grid exists across and through the electrode. The voids or spaces existing between the active electrode material particles, e.g. spheres, are then filled up with a composite electrolyte in accordance with embodiments of the present invention. The composite electrolyte comprises an electrically insulating material having a plurality of pores and a solid electrolyte material covering inner surfaces of the plurality of pores. The composite electrode may further comprise for example electrically conductive additives and/or a binding agent.

Embodiments of the present invention further relate to a solid-state battery cell comprising a stack of an anode, a solid electrolyte layer and a cathode, wherein at least one of the anode and the cathode is a composite electrode in accordance with embodiments of the present invention. The solid electrolyte layer comprises a composite electrolyte containing an electrically insulating material having a plurality of pores and a solid electrolyte material covering inner surfaces of the plurality of pores. The solid electrolyte layer is in electrical and ionic contact with the anode and the cathode. It is an advantage of embodiments of the present invention that solid-state battery cells are provided which avoid many of the problems commonly associated with liquid electrolyte cells. Such problems include electrolyte leakage, dryout, anode passivation, and dendrite formation. In addition, the use of all solid-state components simplifies fabrication of the cell and leads to a mechanically stable device.

The solid-state battery cell may further comprise a first current collector in electrical contact with the anode and a second current collector in electrical contact with the cathode.

In embodiments of the present invention, the porous electrically insulating material (further also referred to as porous glass in embodiments of the present invention) may for example consist of porous silica, porous alumina or porous alumina silicates. It may contain any porous dielectric material that can be formed, e.g. casted, from a viscous or liquid solution. For example, the porous electrically insulating material may be formed by a sol-gel process, e.g. using a metal precursor (e.g. TEOS: Si(OC₂H₅)₄), a solvent mixture (e.g. water and ethanol), an acid (e.g. HNO₃, HCl) or a base (e.g. NH₄OH) catalyst and a surfactant.

The porosity of the electrically insulating material or glass may for example be in the range between 5% and 50%, the present invention not being limited thereto. The pore size (characterized by the pore diameter) may for example be in the range between 0.4 nm and 50 nm, the present invention not being limited thereto.

In the further description, the present invention is mainly described for Li-ion batteries, but the present invention is not limited thereto. For example, the present invention also relates to other battery types based on ion insertion, such as for example Mg batteries or Mg-ion batteries.

In embodiments of the present invention the solid electrolyte material may for example be an inorganic electrolyte material. For example, in case of a Li-ion battery, the inorganic electrolyte material may comprise a Li-ion salt such as LiTaO₃, LiAl₂O₄, Li₂SiO₃, Li₂Znl₄, LiNO₃, LiPO₃, Li₃PO₄, LiH₂PO₄, Li₂HPO₄, Li₂SO₄, Li₂CO₃, LiHCO₃, Li₂O, LiOH, Lil or LiClO₄, the present invention not being limited thereto.

Alternatively, an insulating polymer may be used as a host for a salt (e.g. Li-ion salt) and form in combination therewith a solid polymer electrolyte material. Illustrative examples of insulating polymers that may be used as a host are Poly-ethylene oxide (PEO), polypropylene oxide (PPO), Poly-phenylene oxide (PPO), polyoxyphenylenes, (POP), poly(methyl methacralate) PMMA, Poly(acrylonitrile) (PAN) or Poly(ethylene glycol) diacrylate (PEGDA).

For a Li-ion battery, the active electrode material of the anode may for example comprise or consist of Li, graphite, silicon, germanium, tin (Sn) or Ti, the present invention not being limited thereto. For example, Li₄Ti₅O₁₂ may be used as an active electrode material for the anode. The active electrode material of the cathode may for example comprise or consist of LiCoO₂, MnO2, LiMn₂O₄, LiFePO₄, LiNiO₂ or V₂O₅, the present invention not being limited thereto.

As an electrically conductive additive to increase the electric conductivity of the cathode material or of the anode material, for example carbon black, carbon nanotubes or graphene may be used, the present invention not being limited thereto. Poly Vinylidene Fluoride (PVDF), PolyVinyl Alcohol (PVA) or Styrene Butadiene Rubber (SBR) may for example be used as a binding agent, the present invention not being limited thereto.

The first current collector may for example comprise Cu or Ni, the present invention not being limited thereto.

The second current collector may for example comprise Al or C, the present invention not being limited thereto.

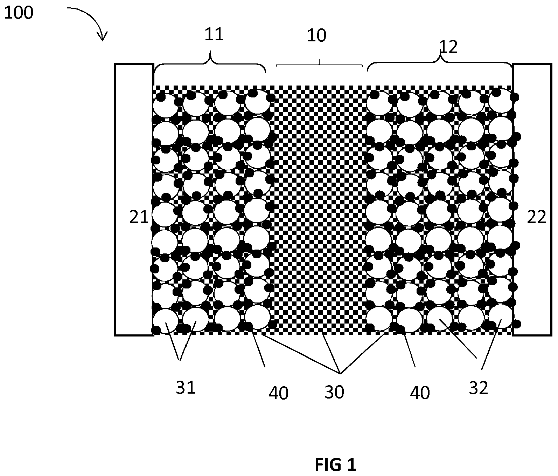

FIG 1 schematically shows a solid-state battery 100 in accordance with an embodiment of the present invention. The solid-state battery 100 comprises a stack of a first composite electrode, e.g. an anode 11, a solid electrolyte layer 10 and a second composite electrode, e.g. cathode 12. The solid-state battery 100 further comprises a first current collector 21 in electrical contact with the anode 11 and a second current collector 22 in electrical contact with the cathode 12. The solid electrolyte layer 10 comprises or consists of a composite electrolyte 30, the composite electrolyte containing a porous electrically insulating material having a plurality of pores and a solid electrolyte material covering inner surfaces of the plurality of pores (not illustrated separately in FIG 1). The solid electrolyte material covering the inner surfaces of the pores may be provided by for example dropping a liquid electrolyte material onto the porous electrically insulating material, which will penetrate into the pores of the porous material. After drying said liquid electrolyte material, a solid electrolyte material covering the inner surfaces of the plurality of pores is obtained. Alternatively, the solid electrolyte material may be deposited on the inner surface of the pores, for instance by a vapor-based method such as chemical vapor deposition (CVD), e.g. atomic layer deposition (ALD).

In the example shown in FIG 1, both the anode 11 and the cathode 12 are composite electrodes and comprise a plurality of active electrode material particles: active anode material particles, in the embodiment illustrated spheres, 31 and active cathode material particles, in the embodiment illustrated spheres, 32, respectively, shown as open circles in FIG 1. In the example shown in FIG 1, the anode 11 and the cathode 12 also contain an electrically conductive additive 40 in the form of particles, e.g. spheres (shown as filled circles). In the anode 11, openings or spaces are present in the network formed by the active anode material particles 31 and the electrically conductive particles 40. These openings or spaces are filled with a composite electrolyte, preferably the same composite electrolyte 30 as the composite electrolyte forming the solid electrolyte layer 10. In the cathode 12, openings or spaces are present in the network formed by the active cathode material particles 32 and the electrically conductive particles 40. These openings or spaces are filled with a composite electrolyte, preferably the same composite electrolyte 30 as the composite electrolyte forming the solid electrolyte layer 10.

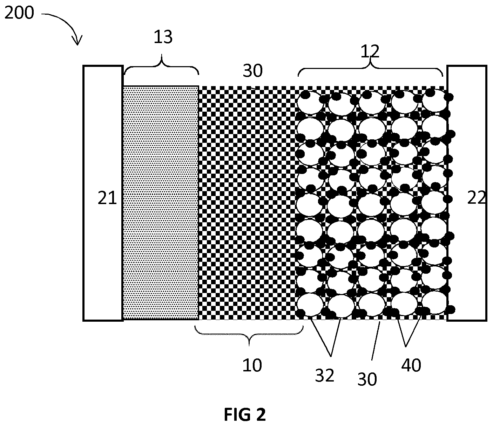

FIG 2 schematically shows a solid-state battery 200 in accordance with another embodiment of the present invention. The solid-state battery 200 comprises a stack of an electrode, e.g. an anode 13, a solid electrolyte layer 10 and a cathode 12. In this embodiment, only the cathode 12 is a composite electrode. The solid-state battery 200 further comprises a first current collector 21 in electrical contact with the anode 13 and a second current collector 22 in electrical contact with the cathode 12. The solid electrolyte layer 10 comprises a composite electrolyte 30, the composite electrolyte containing a porous electrically insulating material having a plurality of pores and a solid electrolyte material covering inner surfaces of the plurality of pores (not illustrated separately in FIG 2).

In the example shown in FIG 2, the anode 13 may for example be a Li metal anode, e.g. Li metal foil, which can for example be formed by Li deposition (e.g. evaporation or sputtering) or by lamination of a lithium foil. Another example of anode layer used in lithium batteries may be a lithium/aluminum alloy foil. A typical thickness of such Li foil is in the range between 50 micrometer and 60 micrometer, the present invention not being limited thereto. The composite electrode, e.g. cathode 12, comprises a plurality of active cathode material particles, e.g. spheres, 32, shown as open circles in FIG 2. In the example shown in FIG 2, the cathode 12 also contains an electrically conductive additive 40 in the form of particles, e.g. spheres (shown as filled circles). In the composite electrode, e.g. cathode 12, openings or spaces are present in the network formed by the active cathode material particles 32 and the electrically conductive particles 40. These openings or spaces are filled with a composite electrolyte, preferably the same composite electrolyte 30 as the composite electrolyte forming the electrolyte layer 10.

It is an advantage of a solid-state battery of embodiments of the present invention that it provides a continuous path of ion surface diffusion due to the presence of the composite electrolyte 30 having a continuous porous structure with pores coated with an ionic compound. This results in a good ion conductivity of the electrolyte layer 10 and a good ion conductivity of the composite electrodes 11, 12.

It is an advantage of a solid-state battery of embodiments of the present invention that the composite electrolyte 30 is also present in at least one of the composite electrodes, without interruption of the contact between active electrode particles of the composite electrodes, resulting in a good energy density.

Embodiments of the present invention, as illustrated in FIG. 1 and 2, may provide composite electrodes comprising a network of active electrode particles with embedded therein a composite electrolyte in accordance with embodiments of the present invention, wherein the composite electrolyte comprises a porous electrically insulating material in which a solid electrolyte material covers the inner surface of the pores. The openings or spaces in between the active electrode particles or spheres, which are electrically connected with each other, e.g. by simple contact, are at least partially filled up by the composite electrolyte. In some embodiments the composite electrolyte may at least partially encapsulate the active electrode particles. In embodiments where an electrically conductive additive 40 in the form of particles is provided to the composite electrodes, the spaces and openings between the active electrode particles and electrically conductive particles form a network. The network is then at least partially filled up by the composite electrolyte.

FIG. 1 and 2 illustrate an all solid-state electrochemical cell comprising a stack of an anode layer 11, a cathode layer 12, and a solid electrolyte layer 10 therebetween. The anode layer 11 and/or cathode layer 12 is a composite electrode according to embodiments of the present invention. The three-layer structure illustrated in FIG. 1 and 2, for example in the form of a sheet, roll, or tape, etc. forms a simple cell or battery. Such structures may employ various additional layers, like e.g. current collectors 21, 22 but also insulating layers and/or bipolar electrode connections. Such a battery may also be connected or combined in stacks to form multi-cell electrochemical devices.

Embodiments of the present invention further provide a method for fabricating a composite electrode comprising a plurality of active electrode material particles in electrical contact with each other and comprising a composite electrolyte in accordance with embodiments of the present invention in spaces between the plurality of active electrode material particles, the composite electrolyte containing an electrically insulating material having a plurality of pores and a solid electrolyte material covering inner surfaces of the plurality of pores.

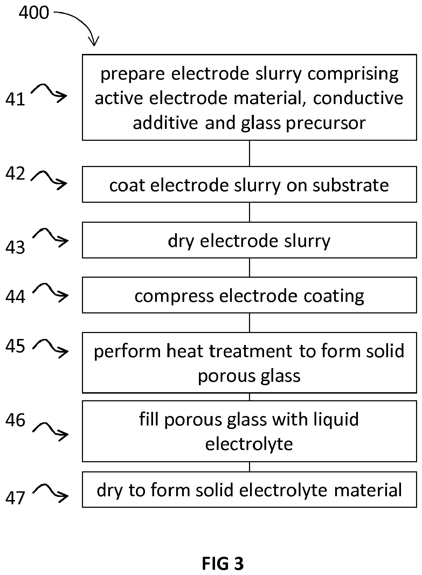

FIG 3 schematically shows an example of a first method 400 that may be used for fabricating a composite electrode in accordance with embodiments of the present invention, wherein a glass precursor is mixed within an electrode slurry before coating the slurry on a substrate.

According to this method 400, first (step 41) an electrode slurry is prepared by mixing an active electrode material in powder form with a liquid or viscous porous glass precursor (e.g. a precursor for porous glass such as for example Tetraethyl Orthosilicate) and an electrically conductive additive. Optionally a binding agent and/or a surfactant may be added to the mixture.

After preparing the electrode slurry, it is coated (step 42) on a substrate, such as for example on an electrically conductive substrate such as an Cu foil (constituting the first current collector) or on an Al foil (constituting the second current collector), the present invention not being limited thereto, and dried, e.g. in a vacuum oven at a temperature in the range between 70°C and 150°C (step 43). Coating the electrode slurry on the substrate may for example be done by doctor blading, tape casting or dip coating, the present invention not being limited thereto. Next the substrate coated with the electrode material (which has been dried, thus forming a dried electrode slurry) is compressed (step 44), e.g. using a roll press machine. The compressing process advantageously increases the density of the electrode coating and homogenizes the layer thickness. At this point, although dried, the electrode coating is still in the form of a gel, e.g. in a mostly liquid yet solid state, due to a three-dimensional cross-linked network within the liquid. By subsequently performing a heat treatment, e.g. in vacuum or at ambient pressure at a temperature in the range between 150°C and 500°C (step 45), the glass precursor (which is present in the electrode coating in the form of gel) is transformed into a (completely) solid porous glass comprising a plurality of pores.

In a next step (step 46), the porous glass is filled with a liquid electrolyte material, for example containing a lithium salt such as a lithium alkoxide. This may for example be done by a nanocasting method, wherein the liquid electrolyte material is for example dropped onto the porous glass and penetrates into the pores of the porous material. Next, at step 47, a drying step, e.g. in vacuum at a temperature between ambient temperature and 500°C, is done such that a solid electrolyte material covering inner surfaces of the plurality of pores of the porous glass material is obtained resulting in a composite solid electrolyte material according to embodiments of the present invention.

In an alternative approach to the method 400 shown in FIG 3, a liquid electrolyte material, e.g. a lithium salt such as a lithium alkoxide or a gel may be mixed with the other electrode components at the stage of preparing the electrode slurry 41. In this alternative approach the step of filling the porous glass matrix of the electrode layer with a liquid electrolyte material (step 46) and the subsequent drying step (step 47) may be omitted, advantageously decreasing the processing time of the method.

In yet an alternative approach to the method 400 shown FIG 3, a solid electrolyte may be deposited on the inner surfaces of the plurality of pores, for instance by means of a vapor-based method such as Chemical Vapor Deposition, for example Atomic Layer Deposition. In this alternative approach the step of filling the porous glass matrix of the electrode layer with a liquid electrolyte material (step 46) and the subsequent drying step (step 47) may be omitted and substituted by the vapor-based deposition step.

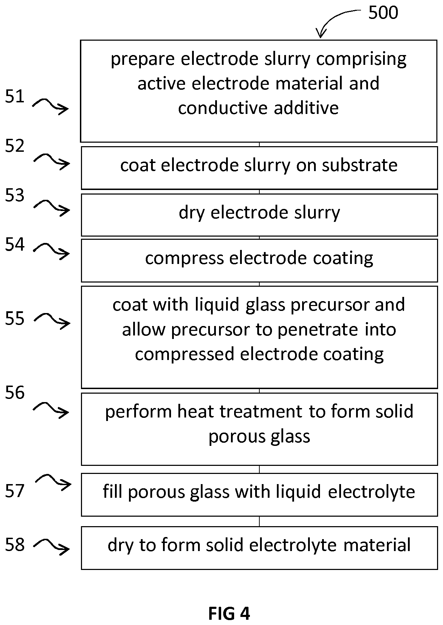

FIG 4 schematically shows an example of a second method 500 that may be used for fabricating a composite electrode in accordance with embodiments of the present invention, wherein the glass precursor is provided after the step of compressing the electrode coating 54.

In this method 500, in a first step (step 51) an electrode slurry is prepared by dispersing and mixing an active electrode material powder comprising active electrode particles, e.g. spheres, an electrically conductive additive, e.g. conductive particles, e.g. spheres, and optionally a binding agent, in a solvent such as for example N-methyl-2-pyrrolidone (NMP). This slurry is coated on a substrate (step 52), such as for example on a conductive substrate like a Cu foil or on an Al foil. Coating the electrode slurry on the substrate may for example be done by doctor blading, tape casting or dip coating. After coating the electrode slurry, the electrode slurry is dried (step 53), e.g. by exposure to hot air, for example at a temperature in the range between 70°C and 150°C. Next the substrate coated with the electrode coating (which has been dried, thus forming a dried electrode slurry) is compressed (step 54), e.g. using a roll press machine. The compressing process increases the density of the electrode coating and homogenizes the layer thickness. In a next step (step 55) a liquid glass precursor is provided as a coating, on top of the compressed electrode coating, e.g. by doctor blading, tape casting or dip coating, and allowed to penetrate into the compressed electrode coating and to fill (at least partially) openings or spaces that are present in the compressed electrode coating for example openings or spaces present between the active particles and electrically conductive additive.

At this point the electrode material is still in the form of a gel and substantially non-porous. By subsequently performing a heat treatment at a temperature in the range between 150°C and 500°C (step 56), a temperature at which pore formation occurs, the glass precursor (which is present in the gel) is transformed into a solid porous electrically insulating (e.g. glass) material having a plurality of pores.

In a next step (step 57), the porous glass of the electrode layer is filled at least partially with a liquid electrolyte material, for example containing a lithium salt such as a lithium alkoxide. This may for example be done by a nanocasting method. Next, at step 58, a drying step is done such that a solid electrolyte material covering inner surfaces of the pores of the glass material is obtained. Alternatively, a solid electrolyte material may be deposited on the inner surfaces of the plurality of pores by means of a vapor-based method such as Chemical Vapor Deposition, for example Atomic Layer Deposition. In this alternative approach the step of filling the porous glass with a liquid electrolyte (step 57) followed by a drying step (step 58) may be omitted and substituted by the vapor-based deposition step.

In yet an alternative approach to this method 500, a liquid electrolyte material, e.g. a lithium salt such as a lithium alkoxide or a gel may be mixed with the liquid glass precursor before providing it on the layer of electrode material at step 55. In this alternative approach the step of filling the porous glass of the electrode layer with a liquid electrolyte material (step 57) and the subsequent drying step (step 58) may be omitted advantageously decreasing the processing time of the method.

Embodiments of the present invention further provide a method for fabricating a solid-state battery comprising a stack of an anode, a composite electrolyte layer and a cathode, wherein the composite electrolyte layer comprises a porous electrically insulating material having a plurality of pores and a solid electrolyte material covering inner surfaces of the plurality of pores, and wherein the anode and/or the cathode is a composite electrode comprising a plurality of active electrode material particles in electrical contact with each other and the composite electrolyte which is provided in the openings or spaces between the particles.

A fabrication method for a solid-state battery in accordance with embodiments of the present invention may be performed at temperatures not exceeding 500°C. The fabrication method may comprise roll-to-roll processing. The fabrication method may consist of roll-to-roll processing.

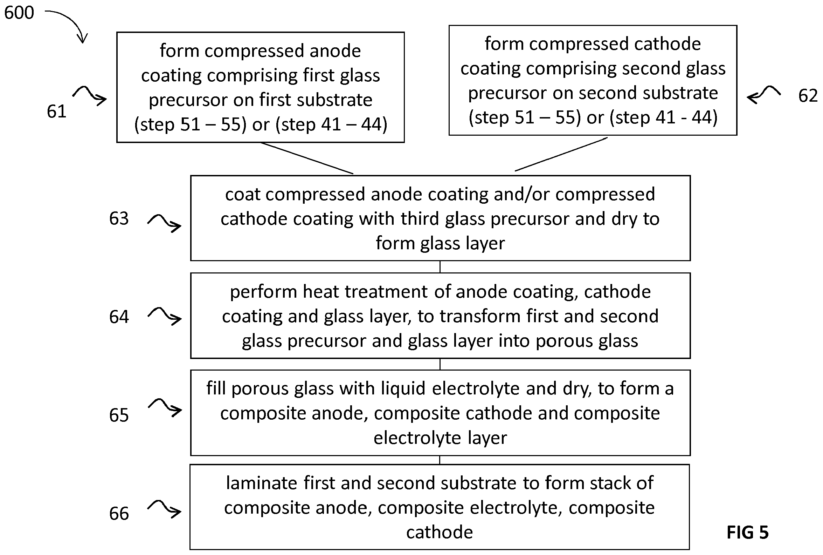

FIG 5 shows an example of a process flow 600 that may be used for fabricating a solid-state battery cell comprising at least one composite electrode according to embodiments of the present invention.

According to this method 600 a compressed anode coating comprising a plurality of active anode material particles and comprising a first glass precursor is formed on a first substrate (step 61). The compressed anode coating may for example be formed according to step 41 to step 44 of method 400 (FIG 3) or according to step 51 to step 55 of method 500 (FIG 4). The first substrate may for example be a foil, e.g. a metal foil such as copper foil, or a plastic foil laminated or coated with a metal layer such as a copper layer.

On a second substrate, a compressed cathode coating is formed, the compressed cathode coating comprising a plurality of active cathode material particles and a second glass precursor (step 62). The compressed cathode coating may for example be formed according to step 41 to step 44 of method 400 (FIG 3) or according to step 51 to step 55 of method 500 (FIG 4). The second substrate may for example be a foil, e.g. a metal foil such as an aluminum foil, or a plastic foil laminated or coated with a metal layer such as an aluminum layer.

The first substrate and/or the second substrate may have the function of a current collector in the solid-state battery cell.

Next, at step 63, a third glass precursor is coated, e.g. casted, as a coating on top of the compressed cathode coating and/or the compressed anode coating. The third glass precursor is then dried, e.g. at a temperature in the range between 70°C and 150°C, to form a glass layer. This drying step is done at a temperature lower than a temperature at which the glass precursor may be transformed into a porous structure (which is typically in the range between 150°C and 500°C). Therefore, after this drying step no pores have been formed yet, i.e. the glass layer is a substantially non-porous glass layer.

The compressed anode coating, the compressed cathode coating and the glass layer are then heated to a temperature in the range between 150°C and 500°C, thus at a temperature where pore formation occurs, thereby transforming the first glass precursor (present in the compressed anode coating), the second glass precursor (present in the compressed cathode coating) and the (non-porous) glass layer into a solid porous material comprising a plurality of pores (step 64).

The porous structure is then filled (step 65) at least partially with a liquid electrolyte material such as e.g. a lithium salt by a nanocasting method or a similar method such as tape casting or dip coating, and dried (step 65), thereby transforming the liquid electrolyte material into a solid electrolyte material covering inner surfaces of the plurality of pores, and forming a composite anode, a composite cathode and a composite electrolyte layer.

Alternatively, providing a solid electrolyte material may comprise depositing the solid electrolyte material on the inner surfaces of the plurality of pores by means of a vapor-based method such as Chemical Vapor Deposition, for example Atomic Layer Deposition. The latter may be considered as a substitute step for the step of filling the porous glass with a liquid electrolyte (step 65) followed by the drying step (65).

After having formed the composite cathode and/or the composite anode, both foils, e.g. the foil coated with the cathode and the foil coated with the anode, are laminated together, optionally with a thin glue layer (having a thickness e.g. in the range between 20 nm and 100 micrometers, more preferably between 100 nm and 10 micrometers) in between. The thin glue layer may for example comprise a porous glass, an ion conducting polymer, a lithium salt solution, an ion conducting gel or a combination thereof (step 66). During lamination a pressure can be applied or the structure may be heated or both pressure and heating may be used.

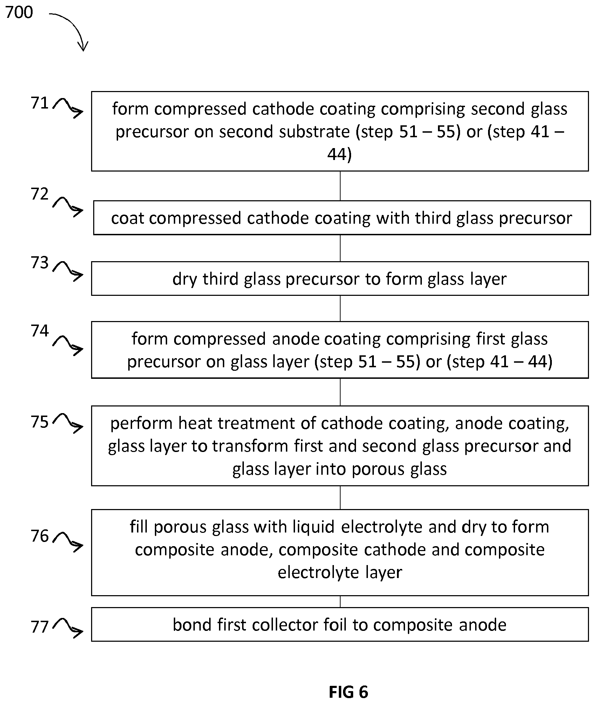

FIG 6 shows another example of a process flow 600 that may be used for fabricating a solid-state battery according to embodiments of the present invention.

First a compressed cathode coating is formed on a second substrate, e.g. second foil, that may function as a second electrode collector in the battery cell (FIG 6, step 71). The compressed cathode coating comprises a plurality of active cathode material particles and a second glass precursor. It may for example be formed according to step 41 to step 44 of method 400 (FIG 3) or according to step 51 to step 55 of method 500 (FIG 4). For example, a mixture comprising an electrode powder material such as for example LMO (lithium manganese oxide) powder, CNT (carbon nanotube) powder and optionally additives such as binders (binding agents) and a solvent such as NMP, is prepared (e.g. according to FIG 4, step 51). It is coated (FIG 4, step 52), dried (FIG 4, step 53) and pressed (FIG 4, step 54) on a metal foil, e.g. a 60 micrometer thick Al foil (second substrate, constituting the second current collector). Drying may for example be done in vacuum at a temperature in the range from 70°C to 150°C. The resulting cathode coating may for example have a thickness in the range between 50 micrometers and 200 micrometers. In a next step (FIG 4, step 55) a liquid glass precursor (e.g. TEOS with organic copolymers) is slowly poured onto the compressed cathode coating (which may e.g. be placed inside a mold to prevent spilling of the liquid) and allowed to penetrate into openings or spaces in between the powder pellets of the compressed layer. Vacuum suction can be used to remove trapped air or gas bubbles. The pellets with glass precursor may then be cured at a temperature e.g. in the range between 70°C and 150°C to form a solid glass without removal of the surfactant and thus without pore formation. The coating may be polished to smoothen the electrode surface.

Next (FIG 6, step 72) a third glass precursor may be provided on the compressed cathode coating, e.g. by spin coating, doctor blading, tape coating or dip coating. This third glass precursor layer is dried or cured (FIG 6, step 73) at a temperature e.g. in the range between 70°C and 150°C to form a glass layer. These steps (72 and 73) may be repeated until a glass layer having a predetermined thickness (for example in the range between 20 nm and 100 micrometers, more preferably 100 nm and 1 micrometer) is obtained. After the drying step there is no pore formation yet, i.e. the glass layer is a substantially non-porous glass layer.

Afterwards a compressed anode coating comprising a plurality of active anode particles and comprising a first glass precursor is provided on the glass layer (FIG 6, step 74). The compressed anode coating may for example be formed using a method according to step 41 to step 44 (FIG 3) or a method according to step 51 to step 55 (FIG 4). For example, for forming the anode coating a mixture comprising an electrode powder material such as for example LTO (lithium titanate) powder, CNT powder and optionally additives such as binders, is prepared (FIG 4, step 51). It is coated on top of the glass layer (FIG 4, step 52), dried (FIG 4, step 53) and compressed (FIG 4, step 54). Drying may for example be done in vacuum at a temperature in the range between 70°C and 150°C. Next, a liquid glass precursor is dropped onto the compressed anode coating and allowed to fill at least partially spaces between pellets of the compressed anode layer (FIG 4, step 55). It may then be cured at a temperature e.g. in the range between 70°C and 150°C to form a solid glass without removal of the surfactant and thus without pore formation. After curing, the foil/cathode/glass/anode stack may be polished to remove excess glass and to smoothen the anode surface. Next (FIG 6, step 75), the stack comprising the compressed cathode coating, the glass layer and the compressed anode coating is heat treated at a temperature in the range between 150°C and 500°C, thus at a temperature where pore formation occurs, to remove the surfactant, and thereby transforming the first glass precursor, the second glass precursor and the glass layer into a solid porous material comprising a plurality of pores. Depending on the thickness and size of the battery stack this step may take a few hours up to 48 hours.

The porous glass material may then be functionalized with an electrolyte material, e.g. a lithium salt such as LiPO₄, LiCO₃ or Lil (FIG 6, step 76). The plurality of pores of the porous glass material (present in the anode, the cathode and the glass layer) are at least partially filled with the liquid electrolyte material, and the liquid electrolyte material is dried to form a solid electrolyte material covering inner surfaces of the plurality of pores. In this way a composite anode, a composite electrolyte layer and a composite cathode in accordance with embodiments of the present invention are formed.

In alternative embodiments the porous glass material may be functionalized by depositing the solid electrolyte material by means of a vapor-based method such as Chemical Vapor Deposition, for example Atomic Layer Deposition. The latter provides an alternative or substrate for step 76, resulting in a solid electrolyte material covering inner surfaces of the plurality of pores.

Next, step 77, a first electrode collector foil (e.g. a copper foil or a foil containing a copper layer) is bonded to the composite anode, e.g. by pressing. The anode surface may receive a slight polish first to clean the surface. Conductive binders such as Ag paint or acetylene black may be used between the Cu and the anode surface to assure good electrical contact between the Cu and the anode.

The foregoing description details certain embodiments of the present invention. It will be appreciated, however, that no matter how detailed the foregoing appears in text, the present invention may be practiced in many ways. It should be noted that the use of particular terminology when describing certain features or aspects of the invention should not be taken to imply that the terminology is being re-defined herein to be restricted to including any specific characteristics of the features or aspects of the invention with which that terminology is associated.

While the above detailed description has shown, described, and pointed out novel features of the invention as applied to various embodiments, it will be understood that various omissions, substitutions, and changes in the form and details of the device or process illustrated may be made by those skilled in the technology without departing from the invention, which is defined by the appended claims.

## Claims

1. A composite electrode (11, 12) comprising an active electrode material and a solid electrolyte, wherein the solid electrolyte is a composite electrolyte (30) **characterized in that** it comprises:
an electrically insulating material having a plurality of pores; and
a solid electrolyte material covering inner surfaces of the plurality of pores.

2. The composite electrode (11, 12) according to any of the previous claims, wherein the active electrode material comprises a plurality of active electrode material particles (31, 32) in electrical contact with each other, and wherein the composite electrolyte (30) is located in spaces between the plurality of active electrode material particles (31, 32).

3. The composite electrode (11, 12) according to any of the previous claims, further comprising an electrically conductive additive (40), and wherein the spaces present between the plurality of active electrode material particles (31, 32) and electrically conductive additive (40) form a network, wherein the composite electrolyte (30) is located in said network.

4. A solid-state battery (100, 200) comprising a stack of an anode (11), a solid electrolyte layer (10) and a cathode (12),
wherein the anode (11) and/or the cathode (12) is a composite electrode according to any of claims 1 to 3.

5. The solid-state battery (100, 200) according to claim 4, wherein the solid electrolyte layer (10) comprises a composite electrolyte (30) comprising:
an electrically insulating material having a plurality of pores; and
a solid electrolyte material covering inner surfaces of the plurality of pores.

6. The solid-state battery (100, 200) according to claim 5, wherein the composite electrode (11, 12) and the solid electrolyte layer (10) comprise a same composite electrolyte (30).

7. A method (400, 500) for fabricating a composite electrode, the method comprising:
preparing (41, 51) an electrode slurry comprising a plurality of active electrode material particles (31, 32) and an electrically conductive additive (40);
coating (42, 52) the electrode slurry on a substrate;
drying (43, 53) the electrode slurry, thereby forming an electrode coating;
compressing (44, 54) the electrode coating, thereby forming a compressed electrode coating;
providing (41, 55) a liquid or viscous glass precursor in the compressed electrode coating;
performing a heat treatment (45, 56), thereby transforming the glass precursor into a solid porous electrically insulating material comprising a plurality of pores; and
covering the inner surfaces of the plurality of pores with a solid electrolyte material.

8. The method (400, 500) according to claim 7, wherein providing the liquid or viscous glass precursor (41, 55) in the compressed electrode coating comprises providing (41) the glass precursor in the electrode slurry before coating the electrode slurry on the substrate.

9. The method (500) according to claim 7, wherein providing the liquid or viscous glass precursor in the compressed electrode coating (55) comprises:
coating (55) the glass precursor on the compressed electrode coating; and
allowing the glass precursor to penetrate into the compressed electrode coating, thereby filling spaces between the plurality of active electrode material particles (31, 32).

10. The method (400, 500) according to any of claims 7 to 9, wherein covering the inner surfaces of the plurality of pores with a solid electrolyte material comprises:
filling (46, 57) the plurality of pores of the porous electrically insulating material at least partially with a liquid electrolyte material; and
performing a drying step (47, 58), thereby forming a solid electrolyte material covering inner surfaces of the plurality of pores of the porous electrically insulating material.

11. The method (400, 500) according to any of claims 7 to 8, wherein covering the inner surfaces of the plurality of pores with a solid electrolyte material comprises:
mixing the glass precursor with a liquid electrolyte material before performing the heat treatment.

12. A method (600, 700) for fabricating a solid-state battery, the method comprising:
forming (61, 71) on a first substrate a compressed anode coating comprising a plurality of active anode material particles, an electrically conductive additive and a first glass precursor;
forming (62, 74) on a second substrate a compressed cathode coating comprising a plurality of active cathode material particles, an electrically conductive additive and a second glass precursor;
providing (63, 72) a third glass precursor on at least one of the compressed anode coating and the compressed cathode coating;
drying (63, 73) the third glass precursor at a temperature lower than the temperature at which pore formation occurs, thereby forming a glass layer having a predetermined thickness on at least one of the compressed anode coating and the compressed cathode coating;
afterwards heating (64, 75) the compressed anode coating, the compressed cathode coating and the glass layer to a temperature suitable for transforming the first glass precursor, the second glass precursor and the glass layer into a solid porous material comprising a plurality of pores; and
covering the inner surfaces of the plurality of pores with a solid electrolyte material.

13. The method (600) according to claim 12, further comprising laminating (66, 77) the first substrate comprising the composite anode (11) to the second substrate comprising the composite cathode (12), thereby forming a stack of a composite anode (11), a composite electrolyte (10) and a composite cathode (12).

14. The method (700) according to claim 12, wherein providing the third glass precursor comprises providing (72) the third glass precursor on the compressed cathode coating and wherein forming the compressed anode coating on the first substrate comprises forming (74) the compressed anode coating on the glass layer.

## Patentansprüche

1. Verbundelektrode (11, 12), die ein aktives Elektrodenmaterial und einen Festelektrolyten umfasst, wobei der Festelektrolyt ein Verbundelektrolyt (30) ist, **dadurch gekennzeichnet, dass** sie umfasst:
ein elektrisch isolierendes Material, das eine Vielzahl von Poren aufweist; und
ein Festelektrolytmaterial, das die inneren Flächen der Vielzahl von Poren bedeckt.

2. Verbundelektrode (11, 12) nach einem der vorstehenden Ansprüche, wobei das aktive Elektrodenmaterial eine Vielzahl von aktiven Elektrodenmaterialpartikeln (31, 32) umfasst, die im elektrischen Kontakt zueinanderstehen, und wobei der Verbundelektrolyt (30) in den Räumen zwischen der Vielzahl von aktiven Elektrodenmaterialpartikeln (31, 32) angeordnet ist.

3. Verbundelektrode (11, 12) nach einem der vorstehenden Ansprüche, die ferner ein elektrisch leitendes Additiv (40) umfasst, und wobei die Räume, die zwischen der Vielzahl von aktiven Elektrodenmaterialpartikeln (31, 32) und dem elektrisch leitenden Additiv (40) vorhanden sind, ein Netzwerk bilden, wobei der Verbundelektrolyt (30) in dem Netzwerk angeordnet ist.

4. Feststoffbatterie (100, 200), umfassend einen Stapel aus einer Anode (11), einer Festelektrolytschicht (10) und einer Kathode (12),
wobei die Anode (11) und/ oder die Kathode (12) eine Verbundelektrode nach einem der Ansprüche 1 bis 3 ist.

5. Feststoffbatterie (100, 200) nach Anspruch 4, wobei die Festelektrolytschicht (10) einen Verbundelektrolyten (30) umfasst, umfassend:
ein elektrisch isolierendes Material, das eine Vielzahl von Poren aufweist; und
ein Festelektrolytmaterial, das die inneren Flächen der Vielzahl von Poren bedeckt.

6. Feststoffbatterie (100, 200) nach Anspruch 5, wobei die Verbundelektrode (11, 12) und die Festelektrolytschicht (10) einen gleichen Verbundelektrolyten (30) umfassen.

7. Verfahren (400, 500) zur Herstellung einer Verbundelektrode, wobei das Verfahren umfasst:
Zubereiten (41, 51) eines Elektrodenschlamms, der eine Vielzahl von aktiven Elektrodenmaterialpartikeln (31, 32) und ein elektrisch leitendes Additiv (40) umfasst;
Aufbringen (42, 52) des Elektrodenschlamms auf ein Substrat;
Trocknen (43, 53) des Elektrodenschlamms unter Bildung eines Elektrodenüberzugs;
Komprimieren (44, 54) des Elektrodenüberzugs unter Bildung eines komprimierten Elektrodenüberzugs;
Bereitstellen (41, 55) eines flüssigen oder viskosen Glasvorläufers im komprimierten Elektrodenüberzug;
Durchführen einer Hitzebehandlung (45, 56), wobei dabei der Glasvorläufer in ein festes poröses elektrisch isolierendes Material umgewandelt wird, welches eine Vielzahl von Poren umfasst; und
Bedecken der inneren Flächen der Vielzahl von Poren mit einem Festelektrolytmaterial.

8. Verfahren (400, 500) nach Anspruch 7, wobei das Bereitstellen des flüssigen oder viskosen Glasvorläufers (41, 55) in dem komprimierten Elektrodenüberzug vor dem Aufbringen des Elektrodenschlamms auf das Substrat das Bereitstellen (41) des Glasvorläufers im Elektrodenschlamm umfasst.

9. Das Verfahren (500) nach Anspruch 7, wobei das Bereitstellen des flüssigen oder viskosen Glasvorläufers in dem komprimierten Elektrodenüberzug (55) umfasst:
Aufbringen (55) des Glasvorläufers auf den komprimierten Elektrodenüberzug; und
Es dem Glasvorläufer ermöglichen, in den komprimierten Elektrodenüberzug einzudringen und dabei die Räume zwischen der Vielzahl von aktiven Elektrodenmaterialpartikeln (31, 32) zu füllen.

10. Verfahren (400, 500) nach einem der Ansprüche 7 bis 9, wobei das Bedecken der inneren Flächen der Vielzahl von Poren mit einem Festelektrolytmaterial umfasst:
zumindest teilweises Füllen (46, 57) der Vielzahl von Poren des porösen elektrisch isolierenden Materials mit einem flüssigen Elektrolytmaterial; und
Durchführen eines Trockenschritts (47, 58), wobei ein Festelektrolytmaterial gebildet wird, das die inneren Flächen der Vielzahl von Poren des porösen elektrisch isolierenden Materials bedeckt.

11. Das Verfahren (400, 500) nach einem der Ansprüche 7 bis 8, wobei das Bedecken der inneren Flächen der Vielzahl von Poren mit einem Festelektrolytmaterial umfasst:
Vermischen des Glasvorläufers mit einem flüssigen Elektrolytmaterial vor Durchführung der Hitzebehandlung.

12. Verfahren (600, 700) zum Herstellen einer Feststoffbatterie, wobei das Verfahren umfasst:
Bildung (61, 71) eines komprimierten Anodenüberzugs auf einem ersten Substrat, umfassend eine Vielzahl von aktiven Anodenmaterialpartikeln, ein elektrisch leitendes Additiv und einen ersten Glasvorläufer;
Bildung (62, 74) eines komprimierten Kathodenüberzugs auf einem zweiten Substrat, umfassend eine Vielzahl von aktiven Kathodenmaterialpartikeln, ein elektrisch leitendes Additiv und einen zweiten Glasvorläufer;
Bereitstellen (63, 72) eines dritten Glasvorläufers auf mindestens einem des komprimierten Anodenüberzugs und des komprimierten Kathodenüberzugs;
Trocknen (63, 73) des dritten Glasvorläufers auf eine Temperatur unterhalb der Temperatur, an der die Porenbildung auftritt, dabei Bildung einer Glasschicht, die eine vorbestimmte Dicke aufweist, auf mindestens einem des komprimierten Anodenüberzugs und des komprimierten Kathodenüberzugs;
Anschließend Erhitzen (64, 75) des komprimierten Anodenüberzugs, des komprimierten Kathodenüberzugs und der Glasschicht auf eine Temperatur, die für die Umwandlung des ersten Glasvorläufers, des zweiten Glasvorläufers und der Glasschicht in ein festes poröses Material, eine Vielzahl von Poren umfassend, geeignet ist; und
Bedecken der inneren Flächen der Vielzahl von Poren mit einem Festelektrolytmaterial.

13. Verfahren (600) nach Anspruch 12, ferner umfassend das Laminieren (66, 77) des ersten Substrats, welches die Verbundanode (11) umfasst, in das zweite Substrat, das die Verbundkathode (12) umfasst, wobei ein Stapel aus einer Verbundanode (11), einem Verbundelektrolyten (10) und einer Verbundkathode (12) gebildet wird.

14. Verfahren (700) nach Anspruch 12, wobei die Bereitstellung des dritten Glasvorläufers das Bereitstellen (72) des dritten Glasvorläufers auf dem komprimierten Kathodenüberzug umfasst und wobei die Bildung des komprimierten Anodenüberzugs auf dem ersten Substrat die Bildung (74) des komprimierten Anodenüberzugs auf der Glasschicht umfasst.

## Revendications

1. Électrode composite (11, 12) comprenant un matériau d'électrode active et un électrolyte solide, dans laquelle l'électrolyte solide est un électrolyte composite (30) **caractérisé en ce qu'**il comprend :
un matériau électriquement isolant comportant une pluralité de pores ; et
un matériau d'électrolyte solide recouvrant des surfaces intérieures de la pluralité de pores.

2. Électrode composite (11, 12) selon l'une quelconque des revendications précédentes, dans laquelle le matériau d'électrode active comprend une pluralité de particules de matériau d'électrode active (31, 32) en contact électrique les unes avec les autres, et dans laquelle l'électrode composite (30) se situe dans des espaces entre la pluralité de particules de matériau d'électrode active (31, 32).

3. Électrode composite (11, 12) selon l'une quelconque des revendications précédentes, comprenant en outre un additif électriquement conducteur (40), et dans laquelle les espaces présents entre la pluralité de particules de matériau d'électrode active (31, 32) et l'additif électriquement conducteur (40) forment un réseau, dans laquelle l'électrolyte composite (30) se situe dans ledit réseau.

4. Batterie à l'état solide (100, 200) comprenant une pile d'une anode (11), d'une couche d'électrolyte solide (10) et d'une cathode (12),
dans laquelle l'anode (11) et/ou la cathode (12) sont/est une électrode composite selon l'une quelconque des revendications 1 à 3.

5. Batterie à l'état solide (100, 200) selon la revendication 4, dans laquelle la couche d'électrolyte solide (10) comprend un électrolyte composite (30) comprenant :
un matériau électriquement isolant comportant une pluralité de pores ; et
un matériau d'électrolyte solide recouvrant des surfaces intérieures de la pluralité de pores.

6. Batterie à l'état solide (100, 200) selon la revendication 5, dans laquelle l'électrode composite (11, 12) et la couche d'électrolyte solide (10) comprennent un même électrolyte composite (30).

7. Procédé (400, 500) pour fabriquer une électrode composite, le procédé comprenant :
la préparation (41, 51) d'une boue d'électrode comprenant une pluralité de particules de matériau d'électrode active (31, 32) et un additif électriquement conducteur (40) ;
le revêtement (42, 52) de la boue d'électrode sur un substrat ;
le séchage (43, 53) de la boue d'électrode, formant ainsi un revêtement d'électrode ;
la compression (44, 54) du revêtement d'électrode, formant ainsi un revêtement d'électrode comprimé ;
la fourniture (41, 55) d'un précurseur de verre visqueux ou liquide dans le revêtement d'électrode comprimé ;
la réalisation d'un traitement thermique (45, 56), transformant ainsi le précurseur de verre en un matériau électriquement isolant poreux solide comprenant une pluralité de pores ; et
le recouvrement des surfaces intérieures de la pluralité de pores avec un matériau d'électrolyte solide.

8. Procédé (400, 500) selon la revendication 7, dans lequel la fourniture du précurseur de verre visqueux ou liquide (41, 55) dans le revêtement d'électrode comprimé comprend la fourniture (41) du précurseur de verre dans la boue d'électrode avant le revêtement de la boue d'électrode sur le substrat.

9. Procédé (500) selon la revendication 7, dans lequel la fourniture du précurseur de verre visqueux ou liquide dans le revêtement d'électrode comprimé (55) comprend :
le revêtement (55) du précurseur de verre sur le revêtement d'électrode comprimé ; et
le fait de laisser le précurseur de verre pénétrer dans le revêtement d'électrode comprimé, remplissant ainsi les espaces entre la pluralité de particules de matériau d'électrode active (31, 32).

10. Procédé (400, 500) selon l'une quelconque des revendications 7 à 9, dans lequel le recouvrement des surfaces intérieures de la pluralité de pores avec un matériau d'électrolyte solide comprend :
le remplissage (46, 57) de la pluralité de pores du matériau électriquement isolant poreux au moins partiellement avec un matériau d'électrolyte liquide ; et
la réalisation d'une étape de séchage (47, 58), formant ainsi un matériau d'électrolyte solide recouvrant des surfaces intérieures de la pluralité de pores du matériau électriquement isolant poreux.

11. Procédé (400, 500) selon l'une quelconque des revendications 7 à 8, dans lequel le recouvrement des surfaces intérieures de la pluralité de pores avec un matériau d'électrolyte solide comprend :
le mélange du précurseur de verre avec un matériau d'électrolyte liquide avant de réaliser le traitement thermique.

12. Procédé (600, 700) pour fabriquer une batterie à l'état solide, le procédé comprenant :
la formation (61, 71) sur un premier substrat d'un revêtement d'anode comprimé comprenant une pluralité de particules de matériau d'anode active, un additif électriquement conducteur et un premier précurseur de verre ;
la formation (62, 74) sur un deuxième substrat d'un revêtement de cathode comprimé comprenant une pluralité de particules de matériau de cathode active, un additif électriquement conducteur et un deuxième précurseur de verre ;
la fourniture (63, 72) d'un troisième précurseur de verre sur au moins l'un du revêtement d'anode comprimé et du revêtement de cathode comprimé ;
le séchage (63, 73) du troisième précurseur de verre à une température inférieure à la température à laquelle la formation de pore survient, formant ainsi une couche de verre ayant une épaisseur prédéterminée sur au moins un du revêtement d'anode comprimé et du revêtement de cathode comprimé ;
ensuite le chauffage (64, 75) du revêtement d'anode comprimé, du revêtement de cathode comprimé et de la couche de verre à une température appropriée pour transformer le premier précurseur de verre, le deuxième précurseur de verre et la couche de verre en un matériau poreux solide comprenant une pluralité de pores ; et
le recouvrement des surfaces intérieures de la pluralité de pores avec un matériau d'électrolyte solide.

13. Procédé (600) selon la revendication 12, comprenant en outre la stratification (66, 77) du premier substrat comprenant l'anode composite (11) sur le deuxième substrat comprenant la cathode composite (12), formant ainsi une pile d'une anode composite (11), d'un électrolyte composite (10) et d'une cathode composite (12).

14. Procédé (700) selon la revendication 12, dans lequel la fourniture du troisième précurseur de verre comprend la fourniture (72) du troisième précurseur de verre sur le revêtement de cathode comprimé et dans lequel la formation du revêtement d'anode comprimé sur le premier substrat comprend la formation (74) du revêtement d'anode comprimé sur la couche de verre.
